# EUROPEAN PATENT APPLICATION

(11) **EP 4 601 242 A1**
(43) Date of publication of application: **13.08.2025**
(21) Application number: 22961431.8
(22) Date of filing: 06.10.2022
(51) Int. Cl.: H04L 9/12

(54) **COMMUNICATION SYSTEM, CONTROL DEVICE, COMMUNICATION METHOD, CONTROL METHOD, AND NON-TRANSITORY COMPUTER-READABLE MEDIUM**

(71) Applicant: NEC Corporation, 108-8001 Tokyo (JP)
(72) Inventor: YASUDA, Wakako, Tokyo 108-8001 (JP); KAWAKAMI, Tetsuo, Tokyo 108-8001 (JP)
(74) Representative: Betten & Resch
(86) International application number: PCT/JP2022/037426
(87) International publication number: WO 2024/075244

(57) **Abstract**

A network system (1) includes a node (10a), a node (10b), a node (10c), and an optical network controller (20). The node (10a) encrypts, by using a key (K1), data to be transmitted to the node (10b). The node (10b) decrypts, by using the key (K1), data received from the node (10a), and encrypts, by using a key (K2), data to be transmitted to the node (10c). The node (10c) decrypts, by using the key (K2), data received from the node (10b). The optical network controller (20) couples an encrypted link (L1) between the node (10a) and the node (10b) to an encrypted link (L2) between the node (10b) and the node (10c) and sets an encrypted communication path from the node (10a) to the node (10c).

## Description

### Technical Field

The present disclosure relates to a communication system, a control apparatus, a communication method, a control method, and a non-transitory computer readable medium.

### Background Art

In recent years, there has been a great increase in occasions where communication performed via a network such as the Internet is exposed to various kinds of threats, and thus techniques for ensuring secure communication have been desired. Progress in studies regarding one example of encryption techniques for ensuring communication security, quantum encryption (i.e., quantum cryptography), has been made.

Quantum encryption enables secure sharing of encryption keys between locations by quantum key distribution (QKD). Non-Patent Literature 1 is an example of known techniques related to quantum encryption.

### Citation List

### Non-Patent Literature

[Non-Patent Literature 1] The Telecommunication Technology Committee, "JT-Y3800 Overview on networks supporting quantum key distribution", Edition 1.1, June 11, 2021, [online], Internet <https://www.ttc.or.jp/application/files/6516/2676/5146/JT-Y3800v1.1.pdf>

### Summary of Invention

### Technical Problem

As disclosed in Non-Patent Literature 1, a network system in which encryption keys are shared by quantum key distribution and encrypted communication is performed is based on an assumption that key relay is performed via relay nodes to perform end-to-end sharing of the encryption keys. In order to perform key relay, it is required to manage keys and to control the key relay. Therefore, it is desired to perform encrypted communication without having to perform key relay.

The present disclosure has been made in view of the aforementioned problems, and an object of the present disclosure is to provide a communication system, a control apparatus, a communication method, a control method, and a non-transitory computer readable medium capable of performing encrypted communication without having to perform key relay.

### Solution to Problem

A communication system according to the present disclosure includes first, second, and third communication apparatuses and a control apparatus configured to control the first, second, and third communication apparatuses, in which the first communication apparatus includes first encryption means for encrypting, using a first key shared with the second communication apparatus, data to be transmitted to the second communication apparatus, and the second communication apparatus includes: a first decryption means for decrypting, by using the first key, data received from the first communication apparatus; and a second encryption means for encrypting, by using a second key shared with the third communication apparatus, data to be transmitted to the third communication apparatus, the third communication apparatus includes a second decryption means for decrypting, by using the second key, data received from the second communication apparatus, and the control apparatus includes setting means for coupling a first encrypted link between the first encryption means and the first decryption means to a second encrypted link between the second encryption means and the second decryption means and setting an encrypted communication path from the first communication apparatus to the third communication apparatus.

A control apparatus according to the present disclosure is a control apparatus configured to control first, second, and third communication apparatuses, the control apparatus including: acquisition means for acquiring information on a link that connects the first communication apparatus and the second communication apparatus and information on a link that connects the second communication apparatus and the third communication apparatus, and setting means for coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

A communication method according to the present disclosure is a communication method in a communication system including first, second, and third communication apparatuses and a control apparatus configured to control the first, second, and third communication apparatuses, in which the first communication apparatus encrypts, using a first key shared with the second communication apparatus, data to be transmitted to the second communication apparatus, the second communication apparatus: decrypts, using the first key, data received from the first communication apparatus, encrypts, using a second key shared with the third communication apparatus, data to be transmitted to the third communication apparatus, the third communication apparatus decrypts, using the second key, data received from the second communication apparatus, and the control apparatus couples a first encrypted link where encrypted communication is performed by using the first key between the first communication apparatus and the second communication apparatus to a second encrypted link where encrypted communication is performed by using the second key between the second communication apparatus and the third communication apparatus, and sets an encrypted communication path from the first communication apparatus to the third communication apparatus.

A control method according to the present disclosure is a control method for controlling first, second, and third communication apparatuses, the control method including: acquiring information on a link that connects the first communication apparatus and the second communication apparatus and information on a link that connects the second communication apparatus and the third communication apparatus; and coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

A non-transitory computer readable medium storing a control apparatus according to the present disclosure is a non-transitory computer readable medium storing a control program that controls first, second, and third communication apparatuses, the control program causing a computer to execute the processing of: acquiring information on a link that connects the first communication apparatus and the second communication apparatus and information on a link that connects the second communication apparatus and the third communication apparatus; and coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

### Advantageous Effects of Invention

According to the present disclosure, it is possible to provide a communication system, a control apparatus, a communication method, a control method, and a non-transitory computer readable medium capable of performing encrypted communication without having to perform key relay.

### Brief Description of Drawings

Fig. 1 is a configuration diagram showing a configuration example of a related network system;
Fig. 2 is a configuration diagram showing a configuration example of another related network system;
Fig. 3 is a configuration diagram showing a configuration example of a network system according to an example embodiment;
Fig. 4 is a configuration diagram showing a configuration example of another network system according to the example embodiment;
Fig. 5 is a configuration diagram showing a configuration example of an optical network controller according to the example embodiment;
Fig. 6 is a configuration diagram showing a configuration example of an optical network system according to a first example embodiment;
Fig. 7 is a configuration diagram showing a configuration example of an optical network controller according to the first example embodiment;
Fig. 8 is a configuration diagram showing a configuration example of a transmission end node according to the first example embodiment;
Fig. 9 is a configuration diagram showing a configuration example of a relay node according to the first example embodiment;
Fig. 10 is a configuration diagram showing a configuration example of a reception end node according to the first example embodiment;
Fig. 11 is a sequence diagram showing an operation example of an optical network system according to the first example embodiment;
Fig. 12 is a flowchart showing an operation example of path setting processing according to the first example embodiment; and
Fig. 13 is a configuration diagram showing an outline of hardware of a computer according to the example embodiment.

### Example Embodiment

Hereinafter, with reference to the drawings, example embodiments will be described. Throughout the drawings, the same elements have the same reference signs, and repeated descriptions have been omitted as appropriate. Note that the arrows shown in each drawing are for illustrative purposes only and do not limit types or directions of signals.

### (Considerations leading to Example Embodiments)

Quantum key distribution is a well-known technique allowing secure key sharing between two remote locations by means of single-photon transmission of a sequence of random numbers as the source of an encryption key (i.e., cryptographic key). The single-photon transmission quantum-mechanically assures that an encryption key is leak-proof, and thus achieves a high degree of confidentiality. For this reason, it is expected to be used for encrypted communications that handle important confidential information.

Single-photon detection is one method for detecting a very weak light such as a single photon. Single-photon detection is a method for measuring a discrete physical quantity, which is the number of photons. In single-photon detection, in many cases, it is determined whether one or more photons have arrived. Quantum key distribution scheme using the single-photon detection is called discrete variable quantum key distribution (DV-QKD), among which research and development of BB84 protocol, which is the closest to a stage of practical usage, has been advancing.

In DV-QKD, if a very weak signal light and a normal signal light are transmitted by wavelength multiplexing, the influence of the normal signal light on the very weak signal light is so great that it becomes quite difficult to generate quantum keys. Therefore, it is required to construct a special-purpose optical fiber network for performing quantum key distribution, and this special-purpose optical fiber network needs to be separated from an optical fiber network where normal optical signals are transmitted and received.

Further, in the quantum key distribution, there is a limitation in the distance between two locations where a quantum key is shared. Therefore, it is required to perform key relay.

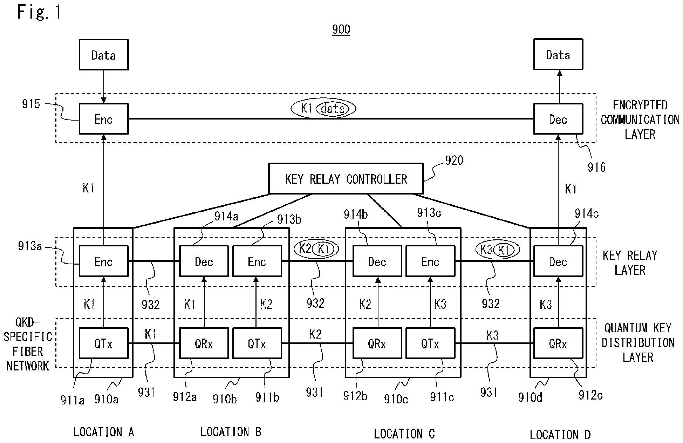

Fig. 1 is a configuration example of a related network system, and shows a configuration example of a network system 900 in which key distribution is performed by DV-QKD. In the example shown in Fig. 1, nodes 910a-910d are disposed in respective locations A-D, and end-to-end encrypted communication is performed from the location A to the location D.

As shown in Fig. 1, the nodes 910 are connected to each other by an optical fiber 931 for quantum key distribution, and the nodes 910 are further connected to each other by an optical fiber 932 for key relay. Further, the location A and the location B are connected to each other by a desired network such as the Internet in order to perform encrypted communication.

Each of the nodes 910 performs quantum key distribution by DV-QKD by a QKD transmitter (QTx) 911 and a QKD receiver (QRx) 912, and performs key relay by an encoder (Enc) 913, which is an encryption device, and a decoder (Dec) 914, which is a decryption device. Further, an encoder (Enc) 915 that encrypts transmission data using an encryption key is disposed at the location A and a decoder (Dec) 916 that decrypts reception data using an encryption key is disposed at the location D.

In the example shown in Fig. 1, key relay is performed as shown in the following (S1)-(S4).
(S1) A quantum key K1 is shared by a QKD transmitter 911a and a QKD receiver 912a between the location A and the location B, a quantum key K2 is shared by a QKD transmitter 911b and a QKD receiver 912b between the location B and the location C, and a quantum key K3 is shared by a QKD transmitter 911c and a QKD receiver 912c b between the location C and the location D.
(S2) In the location B, an encoder 913b encrypts, by the key K2, the key K1 to be relayed, and sends the encrypted key K1 from the location B to the location C. In the location C, a decoder 914b decrypts, by the key K2, the received data, and acquires the key K1. At this time, the key K1 is safely relayed from the location B to the location C by using One-time-pad as an encryption scheme. One-time-pad is an encryption scheme for performing encryption by using a key having a length the same as that of data, and it is mathematically guaranteed that this cannot be broken.
(S3) In the location C, an encoder 913c encrypts, by the key K3, the key K1 to be relayed, and sends the encrypted key K1 from the location C to the location D. In the location D, a decoder 914c decrypts, by the key K3, the received data, and acquires the key K1. Like in (S2), by using One-time-pad as an encryption scheme, the key K1 is safely relayed from the location C to the location D.
(S4) As a result, the location A and the location D can share the encryption key K1. The encoder 915 at the location A encrypts, by the key K1, data to be transmitted, transmits the encrypted data via a desired network, and the decoder 916 at the location D decrypts, by the key K1, the received data, and acquires the decrypted data.

As described above, an optical fiber used for quantum key distribution needs to be separated from other optical fiber networks, and thus it needs to be separated also from a communication route where the key relay is performed. That is, as shown in Fig. 1, two optical fibers; the optical fiber 931 for quantum key distribution and the optical fiber 932 for key relay, need to be provided between two locations where quantum key distribution is performed. Further, a route for performing encrypted communication of data between the location A and the location D is also required, and thus a three-layer structure including a quantum key distribution layer, a key relay layer, and an encrypted communication layer needs to be employed in order to perform encrypted communication using quantum encryption keys.

Further, as shown in Fig. 1, a key relay controller 920 that controls key relay in each node 910 needs to be provided in order to perform key relay from the location A to the location D. The key relay controller 920 controls a route for performing key relay between the node 910a at the location A and the node 910d at the location D. The key relay controller 920 manages the number of keys generated by quantum key distribution in each node 910, determines the node 910 where the key relay from the location A to the location D is performed in accordance with the number of keys generated in each node 910, and controls the relay operation of each node 910.

Another promising method for performing very weak light detection is coherent detection. In the coherent detection, a continuous physical quantity of quadrature amplitude of an electric field is measured. Quantum key distribution that uses coherent detection is called Continuous Variable Quantum Key Distribution (CV-QKD), and research on CV-QKD, including its mounting experiments, has been progressing, and its unconditional security has recently been theoretically demonstrated, although it has a relatively short research history compared to DV-QKD.

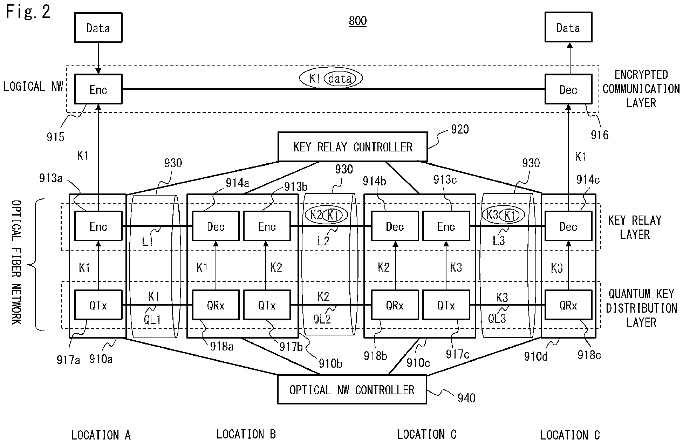

Fig. 2 shows another related network system, and shows a configuration example of a network system 800 where key distribution is performed by CV-QKD. Fig. 2 is a study example in which CV-QKD is applied to the network system 900 shown in Fig. 1. In the example shown in Fig. 2, each node 910 performs quantum key distribution by CV-QKD by a QKD transmitter 917 and a QKD receiver 918.

In CV-QKD, even when a very weak optical signal light and a normal optical signal light are transmitted by wavelength multiplexing by a filter function that the coherent detection has, it is possible to sufficiently generate quantum keys. In DV-QKD, two optical fibers; one is for a quantum key distribution layer and the other one is for a key relay layer, are required, whereas CV-QKD allows wavelength-multiplex transmission of these two layers. Further, in CV-QKD, it is possible to generate quantum keys in a related optical fiber network where wavelength-multiplex transmission is performed, and to provide a quantum key distribution layer and a key relay layer in the related optical fiber network. That is, as shown in Fig. 2, key distribution links QL1-QL3 where key distribution is performed and encrypted links L1-L3 where key relay is performed can be multiplexed by an optical fiber 930 that connects the nodes 910.

As a result of studying the study example shown in Fig. 2, the present inventors have found the following problems. In the related optical fiber network where wavelength-multiplex transmission is performed, an optical network controller that controls wavelengths, bandwidths, and routes is used, and an optical network controller 940 that controls each node 910 may be provided, like in Fig. 2. However, there is no concept of managing quantum keys in the related optical network controller 940. Therefore, there is a problem that the concept of key relay needs to be added to the optical network controller 940 in order to perform key relay in the related optical network, as shown in Fig. 2.

Further, as shown in Fig. 2, this technique has another problem that the encrypted communication layer by using quantum keys is separated from other layers, and a specific method for providing the encrypted communication layer in the optical network has not been established.

### (Outline of Example Embodiments)

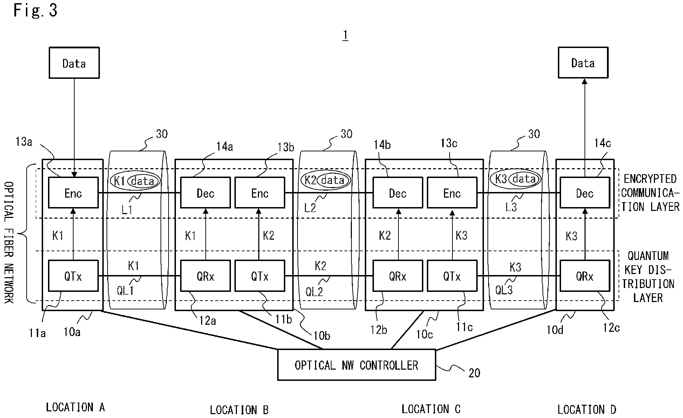

Next, an outline of example embodiments will be described. Fig. 3 shows a configuration example of a network system according to the example embodiments.

As shown in Fig. 3, a network system (communication system) 1 according to the example embodiments includes nodes 10a-10d disposed in locations A-D, respectively, and an optical network controller 20. Note that the number of nodes 10 is not limited to four, and may be, for example, any number that is three or greater. Each of the nodes 10 is a communication apparatus that includes, for example, a trusted node (QKD node), shares a quantum key by performing quantum key distribution by CV-QKD, and performs encrypted communication using the shared key. The nodes 10 are connected to each other by an optical fiber 30. For example, in the optical fiber 30, signals of key distribution links QL1-QL3 where key distribution is performed among the nodes and signals of encrypted links L1-L3 where encrypted communication is performed among the nodes are wavelength-multiplexed.

In this example, like in Figs. 1 and 2, the node 10a at the location A serves as a transmission end node, the nodes 10b and 10c at the locations B and C each serve as a relay node, and the node 10d at the location D serves as a reception end node.

The node 10a includes a QKD transmitter 11a and an encoder 13a. The QKD transmitter 11a is a key distribution unit that shares a key K1 with the node 10b (QKD receiver 12a) by performing key distribution by CV-QKD via the key distribution link QL1. The encoder 13a is an encryption unit that encrypts, by the key K1 shared with the node 10b, transmission data to be input, that is, data to be transmitted to the node 10b. The encoder 13a transmits the encrypted data to the node 10b via the encrypted link L1.

The node 10b includes a QKD receiver 12a, a decoder 14a, a QKD transmitter 11b, and an encoder 13b. The QKD receiver 12a is a key distribution unit that shares the key K1 with the node 10a (QKD transmitter 11a) by performing key distribution by CV-QKD with the node 10a (QKD transmitter 11a) via the key distribution link QL1. The decoder 14a is a decryption unit that decrypts, by the key K1, data received via the encrypted link L1. The QKD transmitter 11b is a key distribution unit that shares a key K2 with the node 10c (QKD receiver 12b) by performing key distribution by CV-QKD with the node 10c (QKD receiver 12b) via the key distribution link QL2. The encoder 13b is an encryption unit that encrypts, by the key K2 shared with the node 10c, the data decrypted by the decoder 14a, that is, data to be transmitted to the node 10c. The encoder 13b transmits the encrypted data to the node 10c via the encrypted link L2.

The node 10c includes a QKD receiver 12b, a decoder 14b, a QKD transmitter 11c, and an encoder 13c. The QKD receiver 12b is a key distribution unit that shares the key K2 with the node 10b (QKD transmitter 11b) by performing key distribution by CV-QKD with the node 10b (QKD transmitter 11b) via the key distribution link QL2. The decoder 14b is a decryption unit that decrypts, by the key K2, data received via the encrypted link L2. The QKD transmitter 11c is a key distribution unit that shares a key K3 with the node 10d (QKD receiver 12c) by performing key distribution by CV-QKD with the node 10d (QKD receiver 12c) via the key distribution link QL3. The encoder 13c is an encryption unit that encrypts, by the key K3 shared with the node 10d, the data decrypted by the decoder 14b, that is, data to be transmitted to the node 10d. The encoder 13c transmits the encrypted data to the node 10d via the encrypted link L3.

The node 10d includes a QKD receiver 12c and a decoder 14c. The QKD receiver 12c is a key distribution unit that shares the key K3 with the node 10c (QKD transmitter 11c) by performing key distribution by CV-QKD with the node 10c (QKD transmitter 11c) via the key distribution link QL3. The decoder 14c is a decryption unit that decrypts, by the key K3, data received via the encrypted link L3. The decoder 14c outputs the decrypted data as reception data.

The optical network controller 20 is a control apparatus that controls communication in the nodes 10a-10d. The optical network controller 20 couples the encrypted links L1, L2, and L3 and sets an encrypted communication path from the node 10a to the node 10d so that the node 10a and the node 10d perform encrypted communication. The optical network controller 20 controls the nodes 10a-10d in such a way that encrypted communication is performed by the encrypted communication path that has been set. For example, an encrypted link L1 in which encrypted communication is performed by the quantum key K1, an encrypted link L2 in which encrypted communication is performed by the quantum key K2, and an encrypted link L3 in which encrypted communication is performed by the quantum key K3 are defined in the optical network controller 20, and a path via the encrypted links L1, L2, and L3 that have been defined is set.

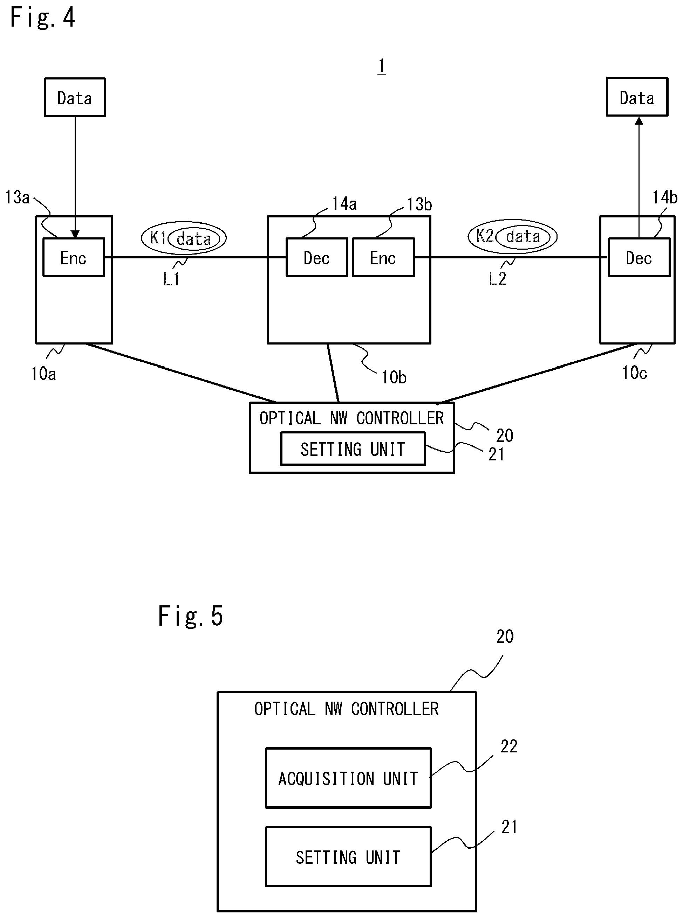

Note that the network system 1 according to the example embodiment may at least have a configuration as shown in Fig. 4. For example, as shown in Fig. 4, the network system 1 may include nodes 10a-10c and an optical network controller 20.

The node 10a (first communication apparatus) may include an encoder (first encryption unit) that encrypts, by using a key K1 (first key) shared with the node 10b, data to be transmitted to the node 10b. The node 10b (second communication apparatus) may include a decoder (first decryption unit) that decrypts, by using the key K1, the data received from the node 10a, and an encoder (second encryption unit) that encrypts, by using a key K2 (second key) shared with the node 10c, data to be transmitted to the node 10c. The node 10c (third communication apparatus) may include a decoder (second decryption unit) that decrypts, by using the key K2, the data received from the node 10b.

The optical network controller 20 (control apparatus) may include a setting unit 21 that couples an encrypted link L1 (first encrypted link) between an encoder 13a and a decoder 14a to an encrypted link L2 (second encrypted link) between an encoder 13b and a decoder 14c and sets the encrypted communication path from the node 10a to the node 10c.

Further, the optical network controller 20 shown in the example of Fig. 4 may be configured as shown in Fig. 5. As shown in Fig. 5, for example, the optical network controller 20 may include a setting unit 21 and an acquisition unit 22. The acquisition unit 22 may acquire information related to the link that connects the node 10a and the node 10b and information related to the link that connects the node 10b and the node 10c. For example, information related to the link is information indicating whether or not the link is an encrypted link. The setting unit 21 may couple the encrypted link L1 to the encrypted link L2 based on the information acquired by the acquisition unit 22 and set the encrypted communication path from the node 10a to the node 10c.

As described above, in the example embodiments, an encryption key is shared between nodes, encrypted links between nodes that perform encrypted communication by the shared key are coupled to each other, and an encrypted communication path for performing end-to-end encrypted communication is set. Accordingly, it becomes possible to perform encrypted communication without having to perform key relay. Further, there is no need to include a key relay controller and there is no need to add functions for managing keys and controlling the key relay to the optical network controller. Furthermore, a key relay layer is unnecessary, and an encrypted communication layer and a quantum key distribution layer can be multiplexed and integrated in the optical network.

### (First Example Embodiment)

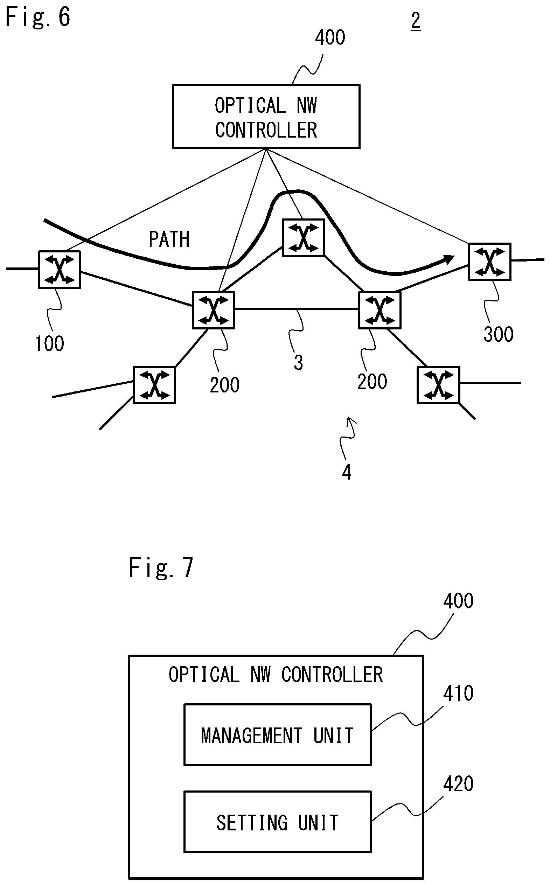

Next, a first example embodiment will be described. Fig. 6 shows a configuration example of an optical network system according to this example embodiment. As shown in Fig. 6, an optical network system 2 according to this example embodiment includes a transmission end node 100, a plurality of relay nodes 200, a reception end node 300, and an optical network controller 400. Note that one of the transmission end node 100, the relay node 200, or the reception end node 300 may be simply referred to as a node. Fig. 6 is merely one example, and a desired node may be a transmission end node 100, a relay node 200, or a reception end node 300.

The transmission end node 100, the relay node 200, and the reception end node 300 are connected to one another via an optical fiber (optical transmission path) 3 in such a way that they can perform optical communication with one another. The transmission end node 100, the relay node 200 and the reception end node 300, and the optical network controller 400 are connected to one another in such a way that they can communicate control signals via any wired or wireless transmission path.

The transmission end node 100 (first communication apparatus), the relay node 200 (second communication apparatus), and the reception end node 300 (third communication apparatus) are each an optical communication apparatus (optical node) that performs optical communication via the optical fiber 3, and can perform quantum key distribution and encrypted communication via the optical fiber 3. The transmission end node 100 and the reception end node 300 are nodes at the transmission end and the reception end of a path, respectively. The relay node 200 performs relay processing between the transmission end node 100 and the reception end node 300 in the path.

The transmission end node 100, the relay node 200, and the reception end node 300 configure an optical network 4. For example, the optical network 4 is a wavelength-multiplexed optical network, and the transmission end node 100, the relay node 200, and the reception end node 300 transmit or receive wavelength-multiplexed optical signals. The optical network 4 may be a mesh-shaped network, a ring-shaped network, a Point-to-Point network, or a network of another topology. Optical amplifiers are not included in each node or links between the nodes. The nodes including the transmission end node 100, the relay node 200, and the reception end node 300 are connected to each other by a key distribution link where key distribution is performed and an encrypted link where encrypted communication is performed. The nodes may be connected to each other by a link for normal communication where encryption is not performed (non-encrypted link). Note that a link is a logical connection unit for performing optical communication between nodes using an optical signal of a predetermined wavelength, and a plurality of wavelengths (wavelength channels) may be used for one link. The encrypted link may use wavelengths whose number corresponds to the amount of data to be transmitted, or the key distribution link may use wavelengths whose number corresponds to the signal amount that is necessary for key distribution. The key distribution link (QKD link) may include a quantum channel where quantum signals, which are very weak light for key distribution, are transmitted and received, and a classic channel where information for synchronization and key distillation is exchanged.

The transmission end node 100, the relay node 200, and the reception end node 300 configure a path from the transmission end node 100 to the reception end node 300 in accordance with control from the optical network controller 400, and transmits an optical signal (data) by the wavelength set on the route of the path. For example, an encrypted communication path may be configured from the transmission end node 100 to the reception end node 300 and encrypted communication is performed via the encrypted communication path. Alternatively, a normal path where encryption is not performed (non-encrypted communication path) may be configured.

The transmission end node 100 transmits an optical signal obtained by performing wavelength multiplexing on an optical signal of an encrypted link having a set wavelength and an optical signal of a key distribution link having a predetermined wavelength to the relay node 200 via the optical fiber 3. The relay node 200 receives the wavelength-multiplexed optical signal from the transmission end node 100 or another relay node 200 via the optical fiber 3, and transmits the optical signal obtained by performing wavelength multiplexing on the optical signal of the encrypted link having the set wavelength and the optical signal of the key distribution link having the predetermined wavelength to another relay node 200 or the reception end node 300 via the optical fiber 3. The reception end node 300 receives the wavelength-multiplexed optical signal from the relay node 200 via the optical fiber 3.

The optical network controller 400 is a control apparatus that manages and controls the optical network 4 including the transmission end node 100, the relay node 200, and the reception end node 300. The optical network controller 400 may be, for example, a Network Management System (NMS) that manages the network.

The optical network controller 400 controls operations of the transmission end node 100, the relay node 200, and the reception end node 300 that configure the optical network 4. For example, the optical network controller 400 manages and controls the configurations of the transmission end node 100, the relay node 200, and the reception end node 300, and a path thereof. The optical network controller 400 sets a route of a path from the transmission end node 100 to the reception end node 300 and a wavelength thereof, and notifies the transmission end node 100, the relay node 200, and the reception end node 300 in the path of the route of the path, the wavelength thereof, or the like. For example, the optical network controller 400 sets an encrypted communication path where encrypted links are connected to each other among the transmission end node 100, the relay node 200, and the reception end node 300.

Fig. 7 shows a configuration example of the optical network controller 400 according to this example embodiment. As shown in Fig. 7, the optical network controller 400 includes a management unit 410 and a setting unit 420.

The management unit 410 manages information that is required for network control, such as network configuration information. The management unit 410 may include, for example, a database that stores information that is required for network control. The management unit 410 also serves as an acquisition unit that acquires information required for network control. The network configuration information includes a connection relation between nodes that configure the optical network 4, information on links connecting these nodes, and so on. The information on the links includes information for identifying whether or not each link is an encrypted link where encrypted communication is performed. The network configuration information may include configuration information of each node, a wavelength, a transmission band, a throughput or the like that can be used by each node. These information items may be set in a database in advance or may be set by information collected from each node.

The setting unit 420 sets (controls) the transmission end node 100, the relay node 200, and the reception end node 300 based on information managed by the management unit 410. The setting unit 420 may set, based on the connection relation between nodes and the information on links between the nodes, a path from the transmission end node 100 to the reception end node 300, and determine a wavelength used in the path in accordance with the usage status of the wavelength. For example, when an encrypted communication path is set, the setting unit 420 extracts encrypted links from links that connect the nodes, connects the extracted encrypted links, and sets an encrypted communication path. The setting unit 420 notifies each node of information that is necessary to perform encrypted communication on the set path. For example, the setting unit 420 may notify each node of wavelength information of the encrypted links transmitted or received by nodes or connection information of the encrypted links.

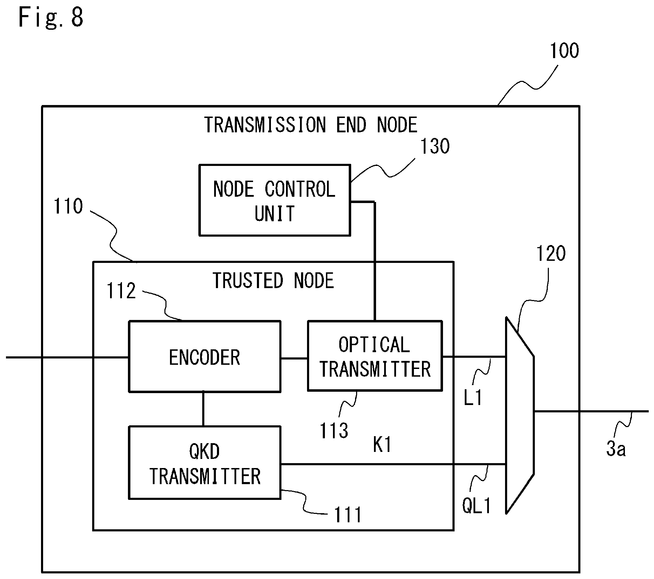

Fig. 8 shows a configuration example of the transmission end node 100 according to this example embodiment. As shown in Fig. 8, the transmission end node 100 includes a trusted node 110, a multiplexer 120, and a node control unit 130. Note that the transmission end node 100 may include an optical transmitter for normal communication where encryption is not performed.

The trusted node 110 includes a QKD transmitter 111, an encoder 112, and an optical transmitter 113. The trusted node 110 may be formed of a plurality of apparatuses, and security of input and output of signals (including keys) between apparatuses within the trusted node 110 is guaranteed.

The QKD transmitter 111 (first key distribution unit) is a transmitter that performs quantum key distribution via a key distribution link QL1. The QKD transmitter 111 generates (shares) a quantum key K1 by performing key distribution with a QKD receiver (e.g., QKD receiver of an intermediate node) connected via an optical fiber 3a. The QKD transmitter 111 outputs the generated quantum key (encryption key, or simply referred to as a key) K1 to the encoder 112.

The QKD transmitter 111 performs key distribution by CV-QKD. The QKD transmitter 111 can be implemented by a configuration similar to that of the optical transmitter used in coherent communication. For example, the QKD transmitter 111 includes a MZ modulator (IQ optical modulator) that applies IQ modulation to a light from a light source or an attenuator that attenuates the intensity of the IQ-modulated optical signal. The attenuator outputs the attenuated optical signal as a quantum signal, which is a very weak light. For example, the wavelength of the key distribution link QL1 is set in advance, and the QKD transmitter 111 transmits a quantum signal of a predetermined wavelength as an optical signal of the key distribution link QL1. Further, the QKD transmitter 111 may include a key distillation unit that generates (shares) a secure key based on the quantum signal received by the QKD receiver by key distillation processing.

The encoder 112 (first encryption unit) encrypts the input data using the key K1 generated by the QKD transmitter 111. The transmission data transmitted from the transmission end node 100 to the reception end node 300 by encrypted communication is input to the encoder 112. The encryption scheme may be One-time-pad or may be another one. The encoder 112 outputs the encrypted data after it has been encrypted to the optical transmitter 113.

The optical transmitter 113 generates an optical signal for optical transmission from the encrypted data encrypted by the encoder 112, and transmits the generated optical signal as a signal of the encrypted link L1. The optical transmitter 113 may modulate encrypted data by a modulation scheme for coherent communication or a desired modulation scheme, and generate an optical signal. The optical transmitter 113 generates an optical signal of the wavelength set as a wavelength of the encrypted link L1 from the node control unit 130.

The multiplexer 120 (first multiplexing unit) combines (performs wavelength multiplexing) optical signals of a plurality of wavelengths into a single optical signal, and transmits the combined optical signal (first multiplexed signal) to the optical fiber 3a (first optical fiber). The multiplexer 120 performs wavelength multiplexing on an optical signal (quantum signal) of the key distribution link QL1 output from the QKD transmitter 111 and an optical signal of the encrypted link L1 output from the optical transmitter 113. Note that the multiplexer 120 may further perform wavelength multiplexing on an optical signal in the link for normal communication where encryption is not performed, that is, an optical signal transmitted from an optical transmitter for normal communication.

The node control unit 130 controls the operation of the trusted node 110 in accordance with the setting from the optical network controller 400. The node control unit 130 acquires the wavelength information of the encrypted link L1 from the optical network controller 400 and sets a wavelength of the optical signal of the encrypted link L1 transmitted by the optical transmitter 113 based on the acquired wavelength information. Note that the node control unit 130 may set, in accordance with the setting from the optical network controller 400, the wavelength of the key distribution link QL1 used by the QKD transmitter 111. Further, the node control unit 130 may set the wavelength of the optical signal in the link for normal communication where encryption is not performed, that is, a wavelength used by the optical transmitter for normal communication.

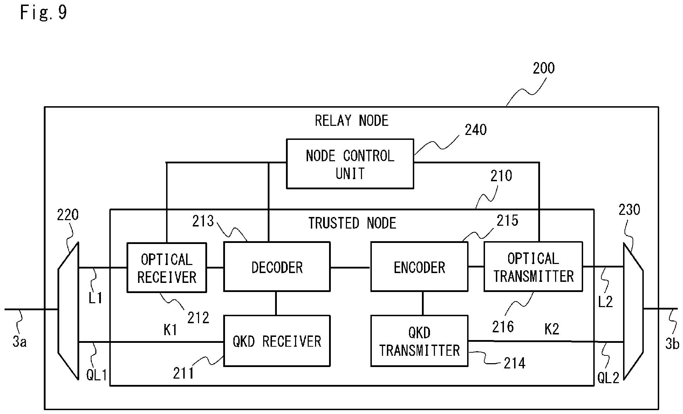

Fig. 9 shows a configuration example of the relay node 200 according to this example embodiment. As shown in Fig. 9, the relay node 200 includes a trusted node 210, a demultiplexer 220, and a multiplexer 230. Note that the relay node 200 may include an optical receiver or an optical transmitter for normal communication where encryption is not performed.

The demultiplexer 220 (first separation unit) separates an optical signal (first multiplexed signal) received from the optical fiber 3a into optical signals of a plurality of wavelengths. The demultiplexer 220 separates the received optical signal into an optical signal of the key distribution link QL1 and an optical signal of the encrypted link L1 in accordance with the wavelength. Note that the demultiplexer 220 may further separate, from the received optical signal, an optical signal in the link for normal communication where encryption is not performed, that is, an optical signal received by an optical receiver for normal communication.

The trusted node 210 includes a QKD receiver 211, an optical receiver 212, a decoder 213, a QKD transmitter 214, an encoder 215, and an optical transmitter 216. Like the trusted node 110 of the transmission end node 100, the trusted node 210 may be formed of a plurality of apparatuses, and security of input and output of signals between apparatuses within the trusted node 210 is guaranteed.

The QKD receiver 211 (second key distribution unit) is a receiver that performs quantum key distribution via the key distribution link QL1. The QKD receiver 211 generates (shares) the quantum key K1 by performing key distribution with a QKD transmitter (e.g., QKD transmitter of the transmission end node or the relay node) connected via the optical fiber 3a. The QKD receiver 211 outputs the generated quantum key K1 to the decoder 213.

The QKD receiver 211 performs key distribution by CV-QKD. The QKD receiver 211 may be implemented by a configuration similar to that of the optical receiver used in coherent communication. For example, the QKD receiver 211 includes a coherent detector such as a 90-degree hybrid circuit. The coherent detector causes the received optical signal (quantum signal) and the local oscillation beam to interfere with each other to perform coherent detection, to thereby generate an IQ signal. For example, the wavelength of the key distribution link QL1 is set in advance, and the QKD receiver 211 receives, among the optical signals separated by the demultiplexer 220, an optical signal of a predetermined wavelength as a quantum signal of a QKD link. Further, the QKD receiver 211 may include a key distillation unit that generates (shares) a secure key by key distillation processing based on the quantum signal received from the QKD transmitter.

The optical receiver 212 receives an optical signal for optical transmission via the encrypted link L1, and generates (demodulates) the encrypted data from the received optical signal. The optical receiver 212 may demodulate the optical signal into encrypted data in accordance with a modulation scheme for coherent communication or a desired modulation scheme. The optical receiver 212 receives, among the optical signals separated by the demultiplexer 220, an optical signal of the wavelength set as a wavelength of the encrypted link L1 from a node control unit 240 as a signal of the encrypted link L1. The optical receiver 212 outputs the encrypted data that has been received and demodulated to the decoder 213.

The decoder 213 (first decryption unit) decrypts the encrypted data received by the optical receiver 212 using the key K1 generated by the QKD receiver 211. The encryption scheme may be One-time-pad or may be may be another one. The decoder 213 outputs the decrypted data to the encoder 215. The decoder 213 may output the decrypted data to the encoder 215 in accordance with an instruction for connecting the encrypted link L1 and the encrypted link L2 from the node control unit 240. That is, the decoder 213 forwards the data received from the encrypted link L1 to the encrypted link L2 via the encoder 215.

The QKD transmitter 214, the encoder 215, and the optical transmitter 216 are similar to the QKD transmitter 111, the encoder 112, and the optical transmitter 113 of the transmission end node 100. That is, the QKD transmitter 214 (third key distribution unit) generates a quantum key K2 by performing key distribution with the QKD receiver (e.g., QKD receiver of the intermediate node or the reception end node) via the key distribution link QL2. The encoder 215 (second encryption unit) encrypts data decrypted by the decoder 213 using the key K2 generated by the QKD transmitter 214. The optical transmitter 216 generates an optical signal for optical transmission from the encrypted data encrypted by the encoder 215 and transmits the generated optical signal as a signal of the encrypted link L2.

Like the multiplexer 120 of the transmission end node 100, the multiplexer 230 (second multiplexing unit) performs wavelength-multiplexing on the optical signal of the key distribution link QL2 output from the QKD transmitter 214 and the optical signal of the encrypted link L2 output from the optical transmitter 216, and transmits the wavelength-multiplexed optical signal (second multiplexed signal) to the optical fiber 3b (second optical fiber). Note that the multiplexer 120 may further perform wavelength-multiplexing on the optical signal in the link for normal communication where encryption is not performed, that is, the optical signal transmitted by the optical transmitter for normal communication.

The node control unit 240 controls an operation of the trusted node 210 in accordance with the setting from the optical network controller 400. The node control unit 240 acquires wavelength information of the encrypted links L1 and L2 from the optical network controller 400, sets, based on the acquired wavelength information, a wavelength of the optical signal of the encrypted link L1 received by the optical receiver 212, and sets a wavelength of the optical signal of the encrypted link L2 transmitted by the optical transmitter 216. Further, the node control unit 240 acquires connection information of the encrypted link L1 and the encrypted link L2 from the optical network controller 400, and sends an instruction to the decoder 213 to connect the encrypted link L1 to the encrypted link L2 based on the acquired connection information. An instruction for connecting the encrypted link L1 and the encrypted link L2 may be sent to the encoder 215. Note that the node control unit 240 may set a wavelength of the key distribution link QL1 used by the QKD receiver 211 or a wavelength of the key distribution link QL2 used by the QKD transmitter 214 in accordance with the setting from the optical network controller 400. Further, the node control unit 240 may set wavelengths of optical signals in the link for normal communication where encryption is not performed, that is, wavelengths used by an optical receiver and an optical transmitter for normal communication.

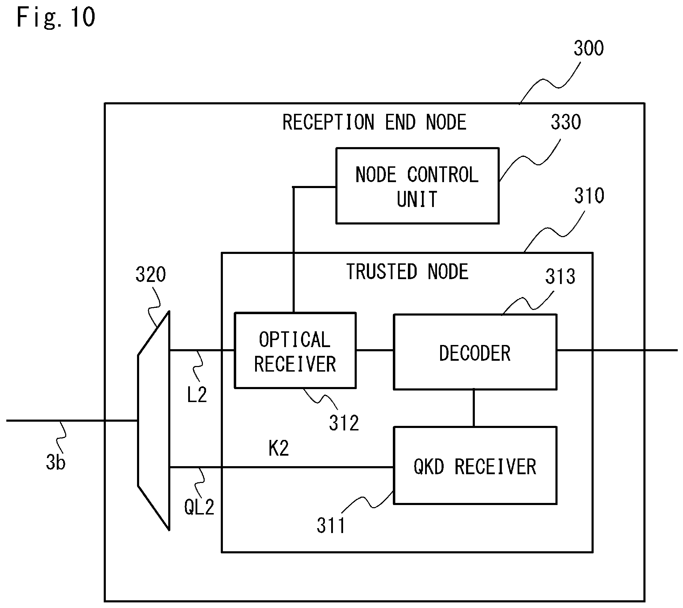

Fig. 10 shows a configuration example of the reception end node 300 according to this example embodiment. As shown in Fig. 10, the reception end node 300 includes a trusted node 310, a demultiplexer 320, and a node control unit 330. Note that the reception end node 300 may include an optical receiver for normal communication where encryption is not performed.

Like the demultiplexer 220 of the relay node 200, the demultiplexer 320 (second separation unit) separates an optical signal (second multiplexed signal) received from the optical fiber 3b into an optical signal of a key distribution link QL2 and an optical signal of a wavelength of an encrypted link L2. Note that the demultiplexer 320 may further separate, from the received optical signal, an optical signal in a link for normal communication where encryption is not performed, that is, an optical signal received by an optical receiver for normal communication.

The trusted node 310 includes a QKD receiver 311, an optical receiver 312, and a decoder 313. Like the trusted node 110 of the transmission end node 100, the trusted node 310 can be formed of a plurality of apparatuses, and security of input and output of signals between apparatuses within the trusted node 310 is guaranteed.

The QKD receiver 311, the optical receiver 312, and the decoder 313 are similar to the QKD receiver 211, the optical receiver 212, and the decoder 213 of the relay node 200. That is, the QKD receiver 311 (fourth key distribution unit) generates a quantum key K2 by performing key distribution with a QKD transmitter (e.g., QKD transmitter of the relay node) via the key distribution link QL2. The optical receiver 312 generates encrypted data from the optical signal received via the encrypted link L2. The decoder 313 (second decryption unit) decrypts the encrypted data received by the optical receiver 312 using the key K2 generated by the QKD receiver 311. The decoder 313 outputs decrypted data. The output data is data input and transmitted to the transmission end node 100.

The node control unit 330 controls the operation of the trusted node 310 in accordance with the setting from the optical network controller 400. The node control unit 330 acquires wavelength information of the encrypted link L2 from the optical network controller 400, and sets the wavelength of the optical signal of the encrypted link L2 received by the optical receiver 312 based on the acquired wavelength information. Note that the node control unit 330 may set, in accordance with the setting from the optical network controller 400, the wavelength of the key distribution link QL2 used by the QKD receiver 311. Further, the node control unit 330 may set the wavelength of the optical signal of the link for normal communication where encryption is not performed, that is, the wavelength used by the optical receiver for normal communication.

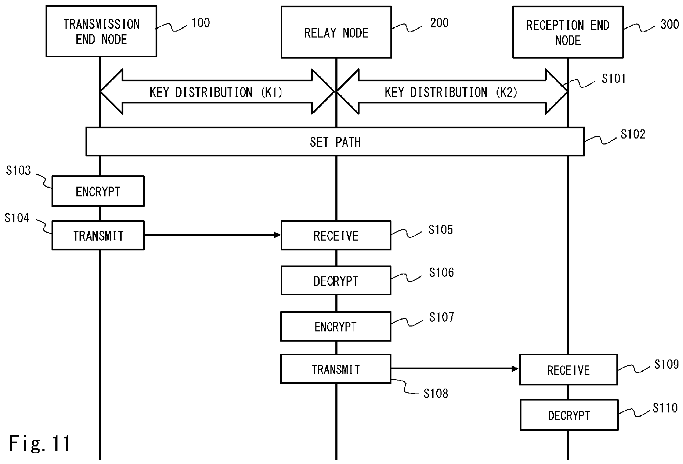

Fig. 11 shows an operation example of the optical network system according to this example embodiment. Fig. 11 shows, as one example, an example in which one relay node 200 relays encrypted communication. As shown in Fig. 11, the transmission end node 100, the relay node 200, and the reception end node 300 perform key distribution among nodes (S101). Key distribution is performed between the QKD transmitter 111 of the transmission end node 100 and the QKD receiver 211 of the relay node 200 via the key distribution link QL1, whereby the quantum key K1 is shared between them. Further, key distribution is performed between the QKD transmitter 214 of the relay node 200 and the QKD receiver 311 of the reception end node 300 via the key distribution link QL2, whereby the quantum key K2 is shared between them. Note that key distribution is continuously performed among the nodes, and the quantum keys K1 and K2 are repeatedly generated.

Next, the optical network controller 400 sets a path between the transmission end node 100 and the reception end node 300 (S102).

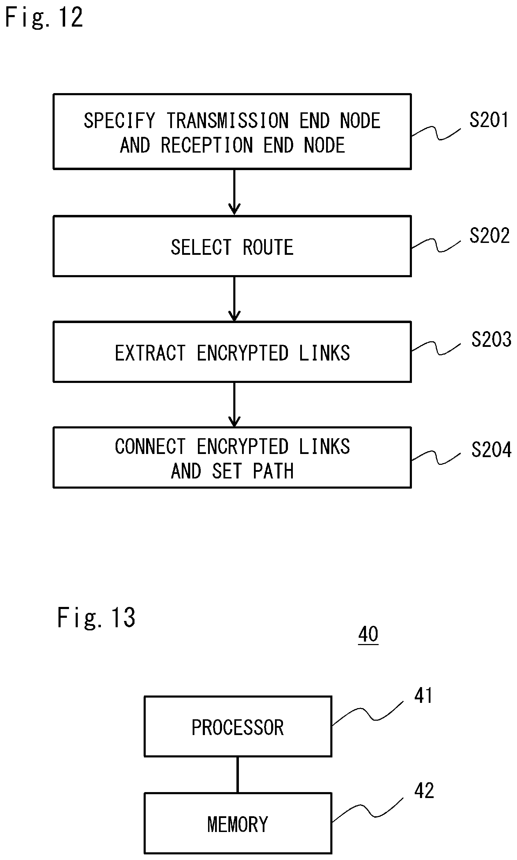

Fig. 12 shows an operation example of the path setting processing in S102. As shown in Fig. 12, the setting unit 420 of the optical network controller 400 specifies the transmission end node 100 and the reception end node 300 (S201). The setting unit 420 specifies, from among the nodes of the optical network 4, the transmission end node 100 and the reception end node 300 where encrypted communication is performed. For example, information for specifying nodes may be externally input and the transmission end node 100 and the reception end node 300 may be specified in accordance with the input information, or the transmission end node 100 and the reception end node 300 may be specified in accordance with the information set in advance.

Next, the setting unit 420 selects a route between the transmission end node 100 and the reception end node 300 that have been specified (S202). The setting unit 420 selects, based on information on a connection relation between nodes managed by the management unit 410, a route from the transmission end node 100 to the reception end node 300. The setting unit 420 may select a route to be used for the path based on the available wavelength, transmission band, throughput, etc.

Next, the setting unit 420 extracts the encrypted links from the selected route (S203). The setting unit 420 extracts, based on information on the links between the nodes managed by the management unit 410, an encrypted link from the links between the nodes included in the selected route. The setting unit 420 may determine the presence or the absence of the encrypted link from the transmission end node 100 to the reception end node 300, and select a route again in a case where the transmission end node 100 to the reception end node 300 cannot be connected by the encrypted link. For example, the setting unit 420 extracts the encrypted link L1 between the transmission end node 100 and the relay node 200 and the encrypted link L2 between the relay node 200 and the reception end node 300.

Next, the setting unit 420 connects the extracted encrypted links, and sets an encrypted communication path from the transmission end node 100 to the reception end node 300 (S204). For example, the setting unit 420 connects the encrypted link L1 to the encrypted link L2 to set an encrypted communication path. The setting unit 420 determines the wavelength of the encrypted links L1 and L2 that configure an encrypted communication path, and notifies the transmission end node 100, the relay node 200, and the reception end node 300 of wavelength information of the encrypted links L1 and L2. Further, the setting unit 420 notifies the relay node 200 of connection information indicating connection of the encrypted link L1 to the encrypted link L2.

Then, the node control unit 130 of the transmission end node 100 sets the wavelength of the optical signal of the encrypted link L1 transmitted by the optical transmitter 113 based on the sent wavelength information. The node control unit 240 of the relay node 200 sets, based on the sent wavelength information, a wavelength of the optical signal of the encrypted link L1 received by the optical receiver 212 and sets a wavelength of the optical signal of the encrypted link L2 transmitted by the optical transmitter 216. Further, the node control unit 240 of the relay node 200 instructs the decoder 213 to connect the encrypted link L1 to the encrypted link L2 based on the sent connection information. The node control unit 330 of the reception end node 300 sets, based on the sent wavelength information, the wavelength of the optical signal of the encrypted link L2 received by the optical receiver 312.

Next, as shown in Fig. 11, the transmission end node 100 encrypts data to be transmitted (S103). The encoder 112 encrypts, using the encryption key K1 generated by the QKD transmitter 111, the transmission data to be input.

Next, the transmission end node 100 transmits the encrypted data after it has been encrypted to the relay node 200 (S104). The optical transmitter 113 modulates the encrypted data encrypted by the encoder 112 into an optical signal of the wavelength set by the node control unit 130, and transmits the modulated optical signal to the optical fiber 3a via the multiplexer 120 as the optical signal of the encrypted link L1.

Next, the relay node 200 receives the encrypted data from the transmission end node 100 (S105). The optical receiver 212 receives an optical signal of the wavelength of the encrypted link L1 set by the node control unit 240 from the optical fiber 3a via the demultiplexer 220, and demodulates the encrypted data from the received optical signal.

Next, the relay node 200 decrypts the received encrypted data (S106). The decoder 213 decrypts, using the encryption key K1 generated by the QKD receiver 211, the encrypted data received by the optical receiver 212. The decoder 213 outputs the decrypted data to the encoder 215 in accordance with an instruction for connecting the encrypted link L1 to the encrypted link L2 sent by the node control unit 240.

Next, the relay node 200 encrypts the decrypted data (S107). The encoder 215 encrypts, using the encryption key K2 generated by the QKD transmitter 214, the data decrypted by the decoder 213.

Next, the relay node 200 transmits the encrypted data after it has been encrypted to the reception end node 300 (S108). The optical transmitter 216 modulates the encrypted data encrypted by the encoder 215 into an optical signal of the wavelength set by the node control unit 240, and transmits the modulated optical signal to the optical fiber 3b via the multiplexer 230 as the optical signal of the encrypted link L2.

Next, the reception end node 300 receives the optical signal of the encrypted data from the relay node 200 (S109). The optical receiver 312 receives an optical signal of the wavelength of the encrypted link L2 set by the node control unit 330 from the optical fiber 3b via the demultiplexer 320, and demodulates the encrypted data from the received optical signal.

Next, the reception end node 300 decrypts the received encrypted data (S110). The decoder 313 decrypts the encrypted data received by the optical receiver 312 using the encryption key K2 generated by the QKD receiver 311. The decoder 313 outputs the decrypted data.

As described above, in this example embodiment, the optical network controller manages encrypted links where quantum keys are used between nodes, and connects the encrypted links, to thereby set a path from the transmission end node to the reception end node. Data to be encrypted is input to the transmission end node, each node directly encrypts the data by a quantum key, and the data is forwarded to the reception end node via the encrypted links. Accordingly, it is possible to perform encrypted communication from the transmission end node to the reception end node without having to perform key relay. The optical relay controller is able to perform encrypted communication only by setting a path without managing keys and controlling the key relay. Further, a signal of a quantum key distribution layer and a signal of an encrypted communication layer are wavelength-multiplexed, and quantum key distribution and encrypted communication where quantum keys are used can be performed in the same optical network.

Note that the present disclosure is not limited to the example embodiments described above, and may be changed as appropriate without departing from the spirit of the present disclosure. For example, while the example in which wavelength multiplexing is performed as a multiplexing system in an optical network has been described in the above example embodiments, multiplexing is not limited to wavelength multiplexing, and may be performed by polarization multiplexing or another one. Further, while the example in which quantum key distribution is performed by CV-QKD has been described in the above example embodiments, quantum key distribution may be performed by another system as long as it is possible to multiplex the key distribution link and the encrypted link.

Each of the configurations in the above example embodiments is composed of hardware or software, or both, and may be composed of one piece of hardware or software, or multiple pieces of hardware or software. Each apparatus (an optical network controller, etc.) and each function (processing) may be implemented by a computer 40 including a processor 41 such as a Central Processing Unit (CPU) and a memory 42 as a storage apparatus, as shown in Fig. 13. For example, a program for performing the method (control method, etc.) in the example embodiments may be stored in the memory 42, and each function may be implemented by executing the program stored in the memory 42 by the processor 41.

These programs include instructions (or software codes) that, when loaded into a computer, cause the computer to perform one or more of the functions described in the embodiments. The program may be stored in a non-transitory computer readable medium or a tangible storage medium. By way of example, and not a limitation, computer readable media or tangible storage media can include a random-access memory (RAM), a read-only memory (ROM), a flash memory, a solid-state drive (SSD) or other types of memory technologies, a CD-ROM, a digital versatile disc (DVD), a Blu-ray (registered trademark) disc or other types of optical disc storage, and magnetic cassettes, magnetic tape, magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

While the present disclosure has been described above with reference to the example embodiments, the present disclosure is not limited to the above-described example embodiments. Various changes that can be understood by those skilled in the art within the scope of the present disclosure can be made to the configurations and the details of the present application.

The whole or part of the example embodiments disclosed above can be described as, but not limited to, the following supplementary notes.

### (Supplementary Note 1)

A communication system comprising first, second, and third communication apparatuses and a control apparatus configured to control the first, second, and third communication apparatuses, wherein
the first communication apparatus comprises first encryption means for encrypting, using a first key shared with the second communication apparatus, data to be transmitted to the second communication apparatus, and
the second communication apparatus comprises:
   a first decryption means for decrypting, by using the first key, data received from the first communication apparatus; and
   a second encryption means for encrypting, by using a second key shared with the third communication apparatus, data to be transmitted to the third communication apparatus,
the third communication apparatus comprises a second decryption means for decrypting, by using the second key, data received from the second communication apparatus, and
the control apparatus comprises setting means for coupling a first encrypted link between the first encryption means and the first decryption means to a second encrypted link between the second encryption means and the second decryption means and setting an encrypted communication path from the first communication apparatus to the third communication apparatus.

### (Supplementary Note 2)

The communication system according to Supplementary Note 1, wherein
the first communication apparatus comprises a first key distribution means for sharing the first key with the second communication apparatus by performing quantum key distribution with the second communication apparatus via a first key distribution link,
the second communication apparatus comprises:
   a second key distribution means for sharing the first key with the first communication apparatus by performing the quantum key distribution with the first communication apparatus via the first key distribution link; and
   a third key distribution means for sharing the second key with the third communication apparatus by performing the quantum key distribution with the third communication apparatus via the second key distribution link, and
the third communication apparatus comprises a fourth key distribution means for sharing the second key with the second communication apparatus by performing the quantum key distribution with the second communication apparatus via the second key distribution link.

### (Supplementary Note 3)

The communication system according to Supplementary Note 2, wherein
the first communication apparatus comprises a first multiplexing means for multiplexing a signal of the first encrypted link and a signal of the first key distribution link and transmitting a multiplexed signal after it has been multiplexed,
the second communication apparatus comprises:
   a first separation means for separating the multiplexed signal received from the first communication apparatus into the signal of the first encrypted link and the signal of the first key distribution link; and
   a second multiplexing means for multiplexing a signal of the second encrypted link and a signal of the second key distribution link and transmitting a multiplexed signal after it has been multiplexed, and
the third communication apparatus comprises a second separation means for separating the multiplexed signal received from the second communication apparatus into a signal of the second encrypted link and a signal of the second key distribution link.

### (Supplementary Note 4)

The communication system according to Supplementary Note 3, wherein
the first multiplexing means wavelength-multiplexes the signal of the first encrypted link and the signal of the first key distribution link, and
the second multiplexing means wavelength-multiplexes the signal of the second encrypted link and the signal of the second key distribution link.

### (Supplementary Note 5)

The communication system according to Supplementary Note 4, wherein the setting means sets a wavelength of the signal of the first encrypted link and a wavelength of the signal of the second encrypted link.

### (Supplementary Note 6)

The communication system according to any one of Supplementary Notes 1 to 5, wherein the setting means extracts the first encrypted link capable of performing encrypted communication from information on a link that connects the first communication apparatus and the second communication apparatus, extracts the second encrypted link capable of performing encrypted communication from information on a link that connects the second communication apparatus and the third communication apparatus, and couples the first encrypted link and the second encrypted link that have been extracted.

### (Supplementary Note 7)

A control apparatus configured to control first, second, and third communication apparatuses, the control apparatus comprising:
acquisition means for acquiring information on a link that connects the first communication apparatus and the second communication apparatus and information on a link that connects the second communication apparatus and the third communication apparatus, and
setting means for coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

### (Supplementary Note 8)

The control apparatus according to Supplementary Note 7, wherein
the first key is a key shared between the first communication apparatus and the second communication apparatus by performing quantum key distribution between the first communication apparatus and the second communication apparatus via a first key distribution link, and
the second key is a key that is shared between the second communication apparatus and the third communication apparatus by performing quantum key distribution between the second communication apparatus and the third communication apparatus via a second key distribution link.

### (Supplementary Note 9)

The control apparatus according to Supplementary Note 8, wherein the setting means sets a wavelength of the signal of the first encrypted link wavelength-multiplexed with the signal of the first key distribution link, and sets a wavelength of the signal of the second encrypted link wavelength-multiplexed with the signal of the second key distribution link.

### (Supplementary Note 10)

A communication method in a communication system comprising first, second, and third communication apparatuses and a control apparatus configured to control the first, second, and third communication apparatuses, wherein
the first communication apparatus encrypts, using a first key shared with the second communication apparatus, data to be transmitted to the second communication apparatus,
the second communication apparatus:
   decrypts, using the first key, data received from the first communication apparatus,
   encrypts, using a second key shared with the third communication apparatus, data to be transmitted to the third communication apparatus,
the third communication apparatus decrypts, using the second key, data received from the second communication apparatus, and
the control apparatus couples a first encrypted link where encrypted communication is performed by using the first key between the first communication apparatus and the second communication apparatus to a second encrypted link where encrypted communication is performed by using the second key between the second communication apparatus and the third communication apparatus, and sets an encrypted communication path from the first communication apparatus to the third communication apparatus.

### (Supplementary Note 11)

The communication method according to Supplementary Note 10, wherein
the first communication apparatus shares the first key with the second communication apparatus by performing quantum key distribution with the second communication apparatus via a first key distribution link,
the second communication apparatus:
   shares the first key with the first communication apparatus by performing the quantum key distribution with the first communication apparatus via the first key distribution link, and
   shares the second key with the third communication apparatus by performing the quantum key distribution with the third communication apparatus via a second key distribution link, and
the third communication apparatus shares the second key with the second communication apparatus by performing the quantum key distribution with the second communication apparatus via the second key distribution link.

### (Supplementary Note 12)

A control method for controlling first, second, and third communication apparatuses, the control method comprising:
acquiring information on a link that connects the first communication apparatus and the second communication apparatus and information on a link that connects the second communication apparatus and the third communication apparatus; and
coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

### (Supplementary Note 13)

The control method according to Supplementary Note 12, wherein
the first key is a key shared between the first communication apparatus and the second communication apparatus by performing quantum key distribution between the first communication apparatus and the second communication apparatus via a first key distribution link, and
the second key is a key that is shared between the second communication apparatus and the third communication apparatus by performing quantum key distribution between the second communication apparatus and the third communication apparatus via a second key distribution link.

### (Supplementary Note 14)

A non-transitory computer readable medium storing a control program that controls first, second, and third communication apparatuses, the control program causing a computer to execute the processing of:
acquiring information on a link that connects the first communication apparatus and the second communication apparatus and information on a link that connects the second communication apparatus and the third communication apparatus; and
coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

### Reference Signs List

- 1: Network System
- 2: Optical Network System
- 3, 3a, 3b: Optical Fiber
- 4: Optical Network
- 10, 10a-10d: Node
- 11, 11a-11c: QKD Transmitter
- 12, 12a-12c: QKD Receiver
- 13, 13a-13c: Encoder
- 14, 14a-14c: Decoder
- 20: Optical Network Controller
- 21: Setting Unit
- 22: Acquisition Unit
- 30: Optical Fiber
- 40: Computer
- 41: Processor
- 42: Memory
- 100: Transmission End Node
- 110: Trusted Node
- 111: QKD Transmitter
- 112: Encoder
- 113: Optical Transmitter
- 120: Multiplexer
- 130: Node Control Unit
- 200: Relay Node
- 210: Trusted Node
- 211: QKD Receiver
- 212: Optical Receiver
- 213: Decoder
- 214: QKD Transmitter
- 215: Encoder
- 216: Optical Transmitter
- 220: Demultiplexer
- 230: Multiplexer
- 240: Node Control Unit
- 300: Reception End Node
- 310: Trusted Node
- 311: QKD Receiver
- 312: Optical Receiver
- 313: Decoder
- 320: Demultiplexer
- 330: Node Control Unit
- 400: Optical Network Controller
- 410: Management Unit
- 420: Setting Unit

## Claims

1. A communication system comprising first, second, and third communication apparatuses and a control apparatus configured to control the first, second, and third communication apparatuses, wherein
the first communication apparatus comprises first encryption means for encrypting, using a first key shared with the second communication apparatus, data to be transmitted to the second communication apparatus, and
the second communication apparatus comprises:
a first decryption means for decrypting, by using the first key, data received from the first communication apparatus; and
a second encryption means for encrypting, by using a second key shared with the third communication apparatus, data to be transmitted to the third communication apparatus,
the third communication apparatus comprises a second decryption means for decrypting, by using the second key, data received from the second communication apparatus, and
the control apparatus comprises setting means for coupling a first encrypted link between the first encryption means and the first decryption means to a second encrypted link between the second encryption means and the second decryption means and setting an encrypted communication path from the first communication apparatus to the third communication apparatus.

2. The communication system according to claim 1, wherein
the first communication apparatus comprises a first key distribution means for sharing the first key with the second communication apparatus by performing quantum key distribution with the second communication apparatus via a first key distribution link,
the second communication apparatus comprises:
a second key distribution means for sharing the first key with the first communication apparatus by performing the quantum key distribution with the first communication apparatus via the first key distribution link; and
a third key distribution means for sharing the second key with the third communication apparatus by performing the quantum key distribution with the third communication apparatus via the second key distribution link, and
the third communication apparatus comprises a fourth key distribution means for sharing the second key with the second communication apparatus by performing the quantum key distribution with the second communication apparatus via the second key distribution link.

3. The communication system according to claim 2, wherein
the first communication apparatus comprises a first multiplexing means for multiplexing a signal of the first encrypted link and a signal of the first key distribution link and transmitting a multiplexed signal after it has been multiplexed,
the second communication apparatus comprises:
a first separation means for separating the multiplexed signal received from the first communication apparatus into the signal of the first encrypted link and the signal of the first key distribution link; and
a second multiplexing means for multiplexing a signal of the second encrypted link and a signal of the second key distribution link and transmitting a multiplexed signal after it has been multiplexed, and
the third communication apparatus comprises a second separation means for separating the multiplexed signal received from the second communication apparatus into a signal of the second encrypted link and a signal of the second key distribution link.

4. The communication system according to claim 3, wherein
the first multiplexing means wavelength-multiplexes the signal of the first encrypted link and the signal of the first key distribution link, and
the second multiplexing means wavelength-multiplexes the signal of the second encrypted link and the signal of the second key distribution link.

5. The communication system according to claim 4, wherein the setting means sets a wavelength of the signal of the first encrypted link and a wavelength of the signal of the second encrypted link.

6. The communication system according to any one of claims 1 to 5, wherein the setting means extracts the first encrypted link capable of performing encrypted communication from information on a link that connects the first communication apparatus and the second communication apparatus, extracts the second encrypted link capable of performing encrypted communication from information on a link that connects the second communication apparatus and the third communication apparatus, and couples the first encrypted link and the second encrypted link that have been extracted.

7. A control apparatus configured to control first, second, and third communication apparatuses, the control apparatus comprising:
acquisition means for acquiring information on a link that connects the first communication apparatus and the second communication apparatus and information on a link that connects the second communication apparatus and the third communication apparatus, and
setting means for coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

8. The control apparatus according to claim 7, wherein
the first key is a key shared between the first communication apparatus and the second communication apparatus by performing quantum key distribution between the first communication apparatus and the second communication apparatus via a first key distribution link, and
the second key is a key that is shared between the second communication apparatus and the third communication apparatus by performing quantum key distribution between the second communication apparatus and the third communication apparatus via a second key distribution link.

9. The control apparatus according to claim 8, wherein the setting means sets a wavelength of the signal of the first encrypted link wavelength-multiplexed with the signal of the first key distribution link, and sets a wavelength of the signal of the second encrypted link wavelength-multiplexed with the signal of the second key distribution link.

10. A communication method in a communication system comprising first, second, and third communication apparatuses and a control apparatus configured to control the first, second, and third communication apparatuses, wherein
the first communication apparatus encrypts, using a first key shared with the second communication apparatus, data to be transmitted to the second communication apparatus,
the second communication apparatus:
decrypts, using the first key, data received from the first communication apparatus,
encrypts, using a second key shared with the third communication apparatus, data to be transmitted to the third communication apparatus,
the third communication apparatus decrypts, using the second key, data received from the second communication apparatus, and
the control apparatus couples a first encrypted link where encrypted communication is performed by using the first key between the first communication apparatus and the second communication apparatus to a second encrypted link where encrypted communication is performed by using the second key between the second communication apparatus and the third communication apparatus, and sets an encrypted communication path from the first communication apparatus to the third communication apparatus.

11. The communication method according to claim 10, wherein
the first communication apparatus shares the first key with the second communication apparatus by performing quantum key distribution with the second communication apparatus via a first key distribution link,
the second communication apparatus:
shares the first key with the first communication apparatus by performing the quantum key distribution with the first communication apparatus via the first key distribution link, and
shares the second key with the third communication apparatus by performing the quantum key distribution with the third communication apparatus via a second key distribution link, and
the third communication apparatus shares the second key with the second communication apparatus by performing the quantum key distribution with the second communication apparatus via the second key distribution link.

12. A control method for controlling first, second, and third communication apparatuses, the control method comprising:
acquiring information on a link that connects the first communication apparatus and the second communication apparatus and information on a link that connects the second communication apparatus and the third communication apparatus; and
coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.

13. The control method according to claim 12, wherein
the first key is a key shared between the first communication apparatus and the second communication apparatus by performing quantum key distribution between the first communication apparatus and the second communication apparatus via a first key distribution link, and
the second key is a key that is shared between the second communication apparatus and the third communication apparatus by performing quantum key distribution between the second communication apparatus and the third communication apparatus via a second key distribution link.

14. A non-transitory computer readable medium storing a control program that controls first, second, and third communication apparatuses, the control program causing a computer to execute the processing of:
acquiring information on a link that connects the first communication apparatus and the second communication apparatus and information on a link that connects the second communication apparatus and the third communication apparatus; and
coupling, based on the acquired information, a first encrypted link where encrypted communication is performed between the first communication apparatus and the second communication apparatus using a first key to a second encrypted link where encrypted communication is performed between the second communication apparatus and the third communication apparatus using a second key, and setting an encrypted communication path from the first communication apparatus to the third communication apparatus.
